# EUROPEAN PATENT SPECIFICATION

(11) **EP 4 452 791 B1**
(45) Date of publication and mention of the grant of the patent: **18.03.2026**
(21) Application number: 22844676.1
(22) Date of filing: 20.12.2022
(51) Int. Cl.: B65G 47/08, B65G 47/82, B65B 35/44, B65G 15/14

(54) **APPARATUS AND METHOD FOR MOVING OBJECTS**
VORRICHTUNG UND VERFAHREN ZUM BEWEGEN VON OBJEKTEN
APPAREIL ET PROCÉDÉ PERMETTANT DE DÉPLACER DES OBJETS

(30) Priority: 23.12.2021 IT 202100032423
(43) Date of publication of application: 30.10.2024
(73) Proprietor: AETNA GROUP S.p.A., 47826 Verucchio (RN) (IT)
(72) Inventor: MARCHESINI, Moris, 47826 Verucchio (RN) (IT); QUERZÈ, Mirko, 47826 Verucchio (RN) (IT); GAVINA, Glauco, 47826 Verucchio (RN) (IT); SECCI, Andrea, 47826 Verucchio (RN) (IT)
(74) Representative: Cicconetti, Andrea
(86) International application number: PCT/IB2022/062538
(87) International publication number: WO 2023/119154

(56) References cited:
- EP-A1- 1 932 782
- EP-A1- 2 316 737
- EP-A1- 2 594 513
- US-B2- 7 921 983

## Description

The invention relates to apparatuses and methods for moving and transferring objects, typically in a packaging machine or plant. In particular, the invention relates to an apparatus and a method for making and linearly moving groups of objects arranged on parallel and spaced rows.

Moving apparatuses are known that are configured to pick up objects arranged aligned one after the other in contact along a first moving direction, arrange them grouped in parallel and spaced rows (each row consisting of a set number of objects) and then move said rows along a second moving direction, parallel or transverse to the first moving direction. Typically said moving apparatuses are intended for feeding a machine or an operating unit arranged downstream and configured, for example for packaging the groups or rows of objects.

Moving apparatuses are known which comprise a first inlet conveyor, which moves the objects arranged aligned and in contact one after the other towards a second conveyor, that is arranged at 90°, i.e., perpendicularly, with respect to the first conveyor and is configured to move the objects exiting the moving apparatus arranged on parallel and spaced rows. For this purpose, these apparatuses comprise one or more transfer elements adapted to transfer one group of objects at a time, formed by a defined number of objects, from the first conveyor to the second conveyor. The transfer element has an elongated shape, extends parallel to the first conveyor and is movable along a direction parallel to the second conveyor with continuous motion at constant speed.

However, such a type of apparatus is not suitable for operating at high speeds since the transfer element, when contacting and engaging the objects coming from the first conveyor, since it moves linearly, imposes on the aforesaid objects an abrupt change of trajectory (of 90°) which causes a stop of the objects along the direction of the first conveyor and a simultaneous high acceleration along the direction of the second conveyor. This sudden change of trajectory can cause instability and therefore the falling of objects on the supporting plane, especially at high moving speeds.

To overcome such a drawback, moving apparatuses are known in which the transfer element is also movable parallel to the first conveyor so as to abut and move the objects according to a motion trajectory composed along the two moving directions, which limits the decelerations and accelerations to which the objects are subjected, thus ensuring their stability.

However, such apparatuses are quite complex and expensive due to the double movement of the transfer element.

EP 2 594 513 Al discloses a moving apparatus comprising first moving means comprising at least one first moving belt configured to abut said objects arranged aligned one behind the other and in contact along a first advancement direction on an advancement plane. Said at least one first moving belt being mobile with motion in order to move along said first advancement direction at a first speed said objects and to separate said objects in groups of a set number. The moving apparatus further comprises second moving means comprising a second moving belt arranged to abut said objects. Said second moving means being arranged to receive said groups of objects from said first moving means and move the groups separately on a first moving plane, which is coplanar to said advancement plane, with continuous motion at a second speed along a transfer direction. The moving apparatus also comprises third moving means comprising at least one transfer element that is mobile with continuous motion at a third speed along a second advancement direction, which is transversal, almost orthogonal, to said first advancement direction, and is arranged to abut and pick up at least one group of objects at a time from said second moving means and then move along said second advancement direction said at least one group of said objects arranged in a row on a supporting plane that is coplanar to said advancement plane and said first moving plane. Supporting means are provided, suitable to support and move said at least one transfer element along a closed curvilinear path having a first operating section along which said transfer element is movable along said second advancement direction.

An object of the invention is to improve the known moving apparatuses and methods for making and linearly moving groups of objects of set number arranged on spaced parallel rows.

Another object is to provide a moving apparatus and a method which allow to precisely and efficiently pick up objects arranged aligned and in contact along a first advancement direction and to arrange said objects grouped in spaced parallel rows, moved along a second advancement direction, in particular orthogonal to the first advancement direction.

A further object is to make a moving apparatus capable of operating safely and reliably even at high moving speeds of objects.

A still further object is to provide a moving apparatus having simple and economical construction and precise and reliable operation.

In a first aspect of the invention, a moving apparatus according to claim 1 is provided.

In a second aspect of the invention, a method for moving objects according to claim 14 is provided.

The invention can be better understood and implemented with reference to the attached drawings which illustrate exemplifying and non-limiting embodiments thereof, in which:
- figure 1 is a partial perspective view of the moving apparatus of the invention in an operating configuration;
- figure 2 is a plan schematic view of the moving apparatus of figure 1;
- figure 3 is a front view of the moving apparatus of figure 2;
- figures 4 to 7 are schematic partial plan views of the moving apparatus of figure 2 which illustrate subsequent operating steps for transferring and moving objects;
- figures 8 and 9 are schematic partial plan views of a variant of the moving apparatus of figure 2 which illustrate subsequent operating steps for transferring and moving objects.

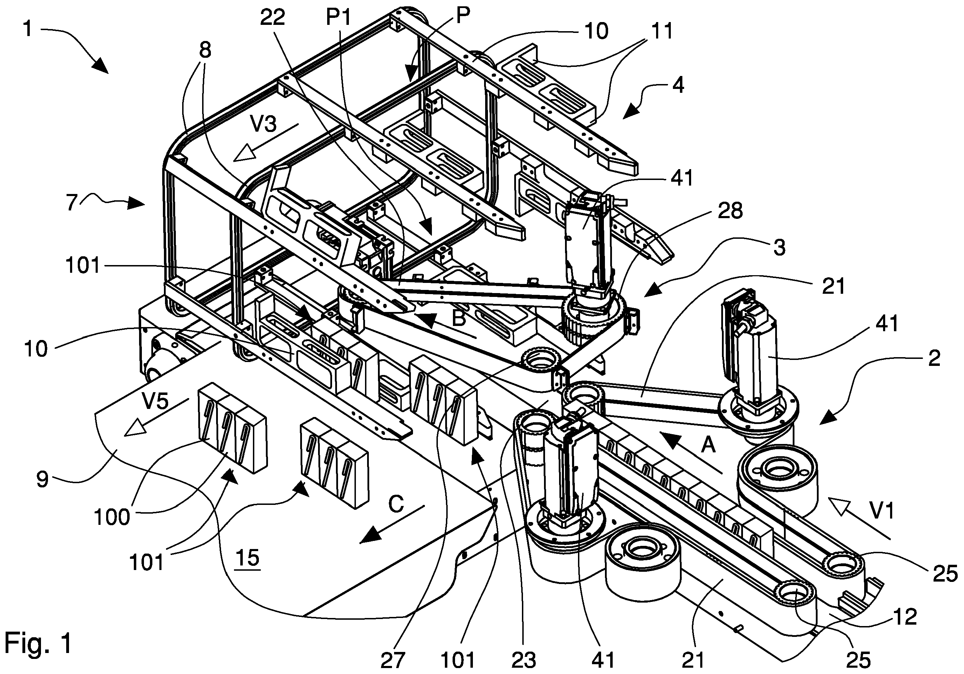

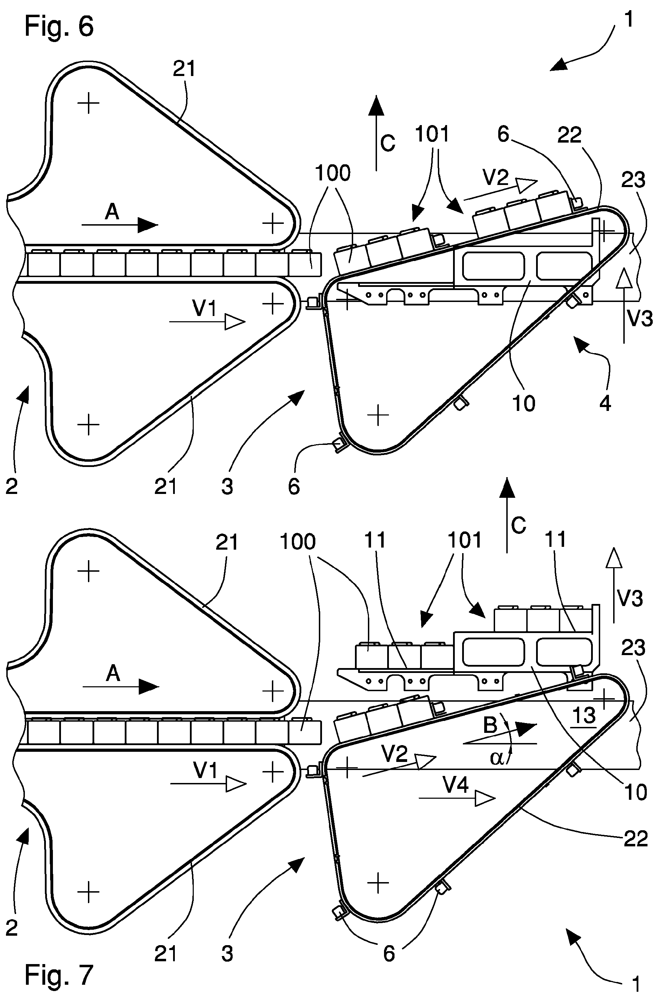

With reference to figures 1 to 7, the moving apparatus 1 for objects 100 of the invention is illustrated, in particular configured to pick up objects 100 arranged aligned and in contact along a first advancement direction A and to arrange the objects grouped in spaced parallel rows, moved along a second advancement direction C which is transversal, in particular orthogonal, to the first advancement direction A.

The objects 100 are for example bottles, cans, jars or parallelepiped-shaped containers as illustrated in the figures.

The apparatus 1 comprises first moving means 2, configured to move and separate into groups 101 of set number N objects 100 arranged aligned and in contact with each other along the first advancement direction A, and second moving means 3, arranged to receive the groups 101 of objects from the first moving means 2 and move the groups separately along a transfer direction B that is inclined by an angle α with respect to the first advancement direction A. The angle α is comprised between 5° and 25°, in particular equal to approximately 15°.

More precisely, the first moving means 2 comprise at least one first moving belt 21 arranged to abut the objects 100 arranged aligned and in contact with each other along the first advancement direction A on an advancement plane 12 and mobile with intermittent motion so as to move the objects 100 along the first advancement direction A at a first speed V1 and so as to separate said objects 100 into groups 101 of a set number N. In particular, said first moving belt 21 is arranged to abut a side wall, in particular vertical, of said objects 100.

The second moving means 3 comprise a second moving belt 22 also arranged to abut the objects 100 and suitable to separately move the groups 101 of objects received from the first moving means 2 with continuous motion at a second speed V2, in particular constant, along the transfer direction B, said groups 101 of objects being supported by, and movable on, a first moving plane 13 that is coplanar with the advancement plane 12. In particular, said second moving belt 22 is arranged to abut a side wall, in particular vertical, of said objects 100.

The moving apparatus 1 also comprises third moving means 4 which include at least one transfer element 10 movable along the second advancement direction C. The transfer element 10 is arranged to abut and pick up at least one group 101 of objects at a time from the second moving means 3 and then move the aforesaid group 101 of objects along the second advancement direction C with the corresponding objects 100 arranged in a row, i.e., arranged one adjacent to the other in contact and aligned orthogonally to the second advancement direction C, on a supporting plane 16 that is coplanar with the advancement plane 12 and the first moving plane 13.

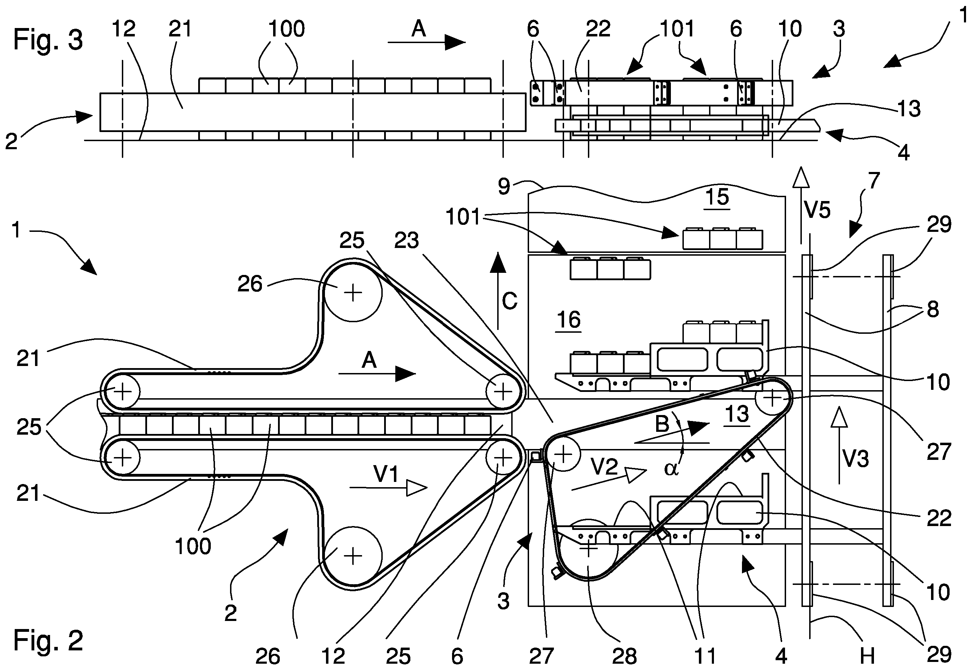

As illustrated in particular in figure 2, the transfer direction B is inclined towards the second advancement direction C.

The moving apparatus 1 further comprises supporting means 7 suitable to support and move the at least one transfer element 10 along a closed curvilinear path P having a first straight operating section P1 along which the transfer element 10 is movable along the second advancement direction C.

In the embodiment shown in figures 1 to 7, the groups 101 of objects comprise a number N of objects 100 equal to three, which are separated from the first moving means 2 and transferred to the second moving means 3. The number N of objects 100 forming a group 101 can obviously also be less than or greater than three, selectable based on the size of the object 100 itself and the needs of the user.

In the illustrated embodiment the first moving means 2 comprise a pair of first moving chains or belts 21 parallel and opposite and configured to abut the objects 100 on opposite sides and move them along the first advancement direction A. More precisely, the first belts 21 abut vertical side walls of the objects 100 and are driven so as to drag and move the objects. The first moving means 2 are driven with intermittent motion along the first advancement direction A so as to separate and provide a defined number of objects 100 forming at least one group 101 to the second moving means 3 at each moving step of the intermittent motion. The first moving means 2 move the objects 100 with the first speed V1 (average speed during the moving step) which is in particular adjustable.

The first moving belts 21 are, for example, endless toothed belts and are mounted on first and second pulleys 25, 26 which are also toothed and rotatable about vertical axes. More precisely, the first moving belts 21 are mounted mirrored with respect to a vertical plane parallel to the first advancement direction A. Each first moving belt 21 is operated by a respective actuator 41, for example a rotary electric motor, acting on a second drive pulley 26 so as to move at the first speed V1.

In a variant of the moving apparatus 1 not illustrated in the figures, the first moving means 2 can comprise a single first moving belt 21 configured to abut one side of the objects 100 and to move them along the first advancement direction A. In this case, the moving apparatus 1 comprises a guide arranged facing and opposite the first moving belt 21 and cooperating with the latter to guide the objects 100 along the first advancement direction A.

The second moving means 3, i.e. the second moving belt 22, are movable with continuous motion at the second speed V2, in particular also substantially constant and adjustable.

The second moving belt 22 is for example an endless toothed belt and is mounted on third and fourth pulleys 27, 28 which are also toothed and rotatable about their respective vertical axes. The second moving belt 22 is operated by a respective actuator 41, for example an electric rotary motor, acting on the fourth driving pulley 28.

In the embodiment shown in the figures, the second belt 22 is provided with at least one stop tooth 6 configured to abut and retain at least one group 101 of objects exiting the first moving means 2. More precisely, the first object 100 of a group 101 of objects exiting at each moving step from the first moving belts 21 abuts and engages the stop tooth 6, which acts as a reference for the correct positioning of the object 100 (and of the group 101 of objects) on the second moving belt 22 so as to ensure a subsequent correct picking up of the group 101 by the transfer element 10.

The stop tooth 6 also provides a stabilizing support to the objects 100 which prevents them from falling during movement.

In the embodiment shown in figures 1 to 7, the second belt 22 comprises a plurality of stop teeth 6 regularly spaced from each other along the extension length of the aforesaid second belt 22 at a distance which allows each stop tooth 6 to abut only one group 101 of objects at a time exiting the first moving means 2.

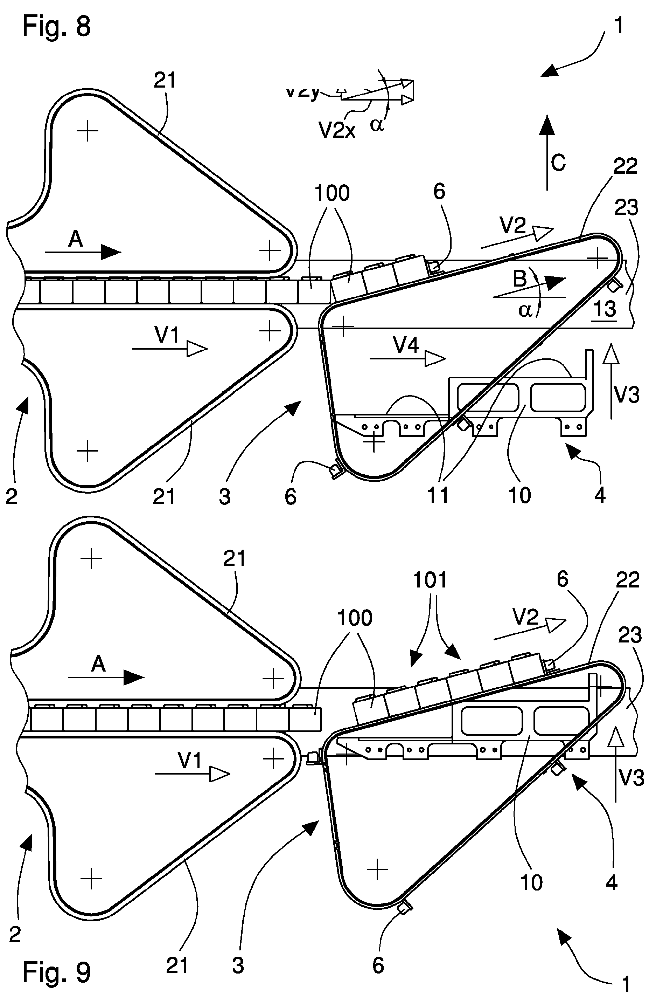

Alternatively, as illustrated in the variant of the moving apparatus 1 of figures 8 and 9, the second belt 22 can comprise a smaller number of stop teeth 6 regularly spaced from one another by a distance which allows each stop tooth 6 to abut a plurality of groups 101 of objects at a time, for example two, exiting the first moving means 2. In this case, during each moving step of intermittent motion the first moving means 2 move and transfer said set plurality of groups 101 of objects to the second moving means 3.

In another variant of the moving apparatus 1 of the invention not illustrated, the second moving belt 22 lacks stop teeth 6.

The moving apparatus comprises fourth moving means 23 interposed between first moving means 2 and second moving means 3 and configured to cooperate to transfer the groups 101 of objects from the first moving means 4 to the second moving means 3. The fourth moving means 23 are movable with continuous motion at a fourth speed V4, in particular adjustable, parallel to the first advancement direction A and comprise a respective transport belt defining the first moving plane 13 for the groups 101 of objects.

The fourth speed V4 is in particular equal to or higher than the first speed V1 of the first moving means 2 and higher than the second speed V2 of the second moving means 3. Thereby, as better explained in the following description, the fourth moving means 23 ensure that the first object 100 of a group 101 of objects exiting the first moving belts 21 abuts and stops against a stop tooth 6 of the second moving belt 22.

The transfer element 10 of the third moving means 4 has an elongated shape and extends transversally, in particular almost orthogonally, to the second advancement direction C.

The transfer element 10 comprises at least one seat 11 suitable to receive and retain a group 101 of objects picked up from the second moving means 3. In the illustrated embodiment the transfer element 10 comprises a plurality of seats 11, for example two, adapted to receive respective groups 101 of objects from the second moving means 3, to be moved together along the second advancement direction C.

In particular, the seats 11 of the transfer element are adjacent and side by side along a direction parallel to the first advancement direction A and staggered along a direction parallel to the second advancement direction C. More precisely, the seat 11 farthest from the first moving means 2 is more advanced along the second advancement direction C with respect to the adjacent seat 11 that is closest to the first moving means 2.

Each seat 11 comprises a first wall 11a and a second wall 11b substantially orthogonal to the supporting plane 16. The first wall 11a, orthogonal to the second advancement direction C, is configured to abut the side walls of the objects 100 of the respective group 101, while the second wall 11b, parallel to the second advancement direction C, is configured to abut the first object group 101, i.e., the head object of the group 101 of objects.

Thanks to the seats 11 of the transfer element 10, the groups 101 of objects are picked up from the second moving belt 22 of the second moving means 3 and guided in a precise and stable manner along the second advancement direction C. In particular, each transfer element 10 picks up and moves two groups 101 of objects forming two rows of parallel and staggered objects 100.

Each transfer element 10 is movable with continuous motion at a third speed V3 along the second advancement direction C.

The curvilinear path P along which each transfer element 10 is moved by the supporting means 7 extends on a movement plane H that is parallel to the second advancement direction C and perpendicular to the supporting plane 16.

The supporting means 7 comprise, for example, one or more endless driving chains or belts 8, for example two, mounted on respective pulleys 29 rotatable about horizontal axes. In the illustrated embodiment, the supporting means 7 comprise a pair of driving chains 8 parallel to each other and to the movement plane H.

Each transfer element 10 is cantilevered mounted on the driving chains 8.

The transfer elements 10 are mounted regularly spaced apart on the supporting means 7.

The moving apparatus 1 further comprises fifth moving means 9 positioned downstream of the third moving means 4 and arranged to receive from the third moving means the groups 101 of objects arranged on parallel and spaced rows and then move the groups along the second advancement direction C.

The fifth moving means 9 are movable with continuous motion at a fifth speed V5, in particular almost equal to or slightly lower than the third speed V3 at which third moving means 4 move. Thereby, the transfer of groups 101 of objects from the third moving means 4 to the fifth moving means 9 occurs without the objects 100 undergoing accelerations or decelerations, this ensuring their stability and balance.

The fifth moving means 9 comprise, for example, a respective transport belt forming a second moving plane 15 for the groups 101 of objects. The second moving plane 15 is coplanar with the advancement plane 12, the first moving plane 13 and the supporting plane 16.

The operation of the moving apparatus 1 of the invention provides that the objects 100 are arranged aligned one behind the other in contact to form a single row within the first moving means 2, driven with intermittent motion. More precisely, the first moving belts 21, which abut the objects 100 on opposite sides, move the objects along the first advancement direction A during the moving steps of the intermittent motion.

With reference to the embodiment of figures 1 to 7, during each moving step of the intermittent motion, the first moving belts 21 at an exit end thereof separate and push a respective group 101 of objects towards the second moving means 3, the group being formed by a set number N of objects 100, for example three.

The groups 101 of objects are moved out of the first moving means 2 also by the fourth moving means 23.

The second moving belt 22 of the second moving means 3 receives and abuts the objects, deviating their path and moving them along the transfer direction B with the second speed V2. Each group 101 of objects is abutted by a respective stop tooth 6 fixed to the second moving belt 22.

The first object 100 of a group 101 of objects exiting the first moving belts 21 abuts the stop tooth 6 of the second moving belt 22 also thank to fourth moving means 23, which move the groups 101 of objects along the first advancement direction A with a fourth speed V4 higher than the second speed V2.

The stop tooth 6 serves as a reference for the correct positioning of the group 101 of objects on the second moving belt 22 so as to ensure the group 101 to be subsequently correctly picked up by the transfer element 10. More specifically, the second moving belt 22 moves and progressively inserts the objects of a group 101 of objects into a respective seat 11 of the moving element 10.

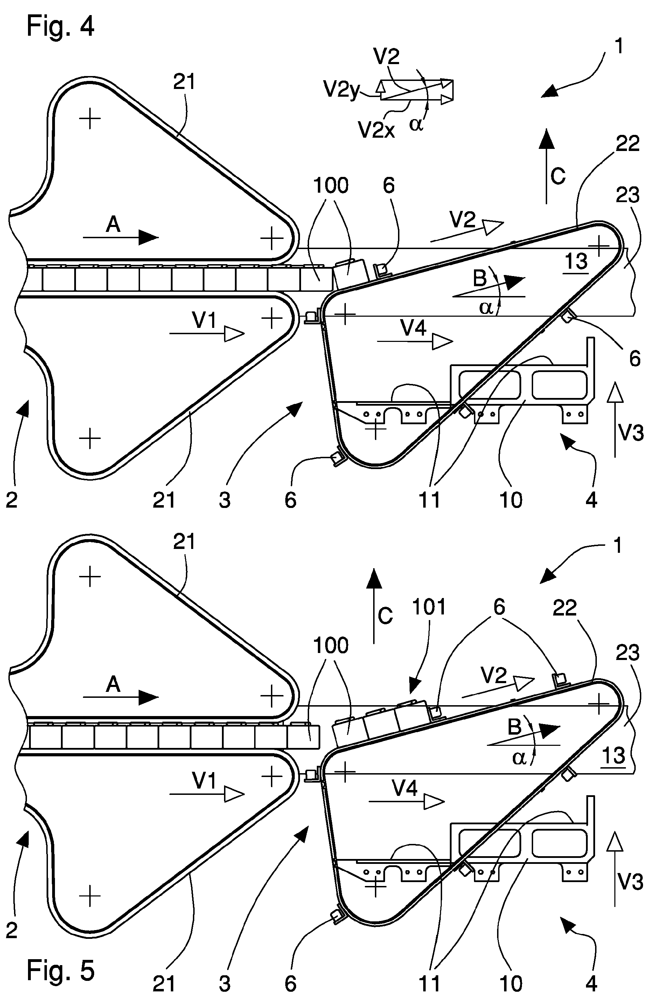

It should be noted that since the transfer direction B is inclined towards the second advancement direction C of the angle α with respect to the first advancement direction A, the objects 100, moved by the second moving belt 22, are subject to a first speed component V2x = V2 cos α, parallel to the first advancement direction A, and to a second speed component V2y = V2 sin α, parallel to the second advancement direction C (figure 4).

The first speed component V2x is lower than the first moving speed V1 of the first moving means 2, i.e., of the first moving belts 21, and the second speed component V2y is lower than the third moving speed V3 of the transfer element 10.

Therefore, the second belt 22 on the one hand slows the objects 100 along the first advancement direction A, before they stop against the second wall 11b of a seat 11 of the transfer element 10 (perpendicular to said first advancement direction A), on the other hand they accelerate and move the objects 100 along the second advancement direction C before they are abutted by the first wall 11a of the seat 11 of the transfer element 10.

Thanks to the second moving belt 22, the amount of impacts of the objects 100 against the transfer element 10 is therefore reduced, this ensuring greater stability to the objects 100 while they are moved and reducing the risk of them falling.

The transfer elements 10, which are mobile with continuous motion along the second advancement direction C, pick up two groups 101 of objects from the second moving belt 22 and transfer them, by sliding them over the supporting plane 16, on the second moving plane 15 of the fifth moving means 9.

Since the transport belt of fifth moving means 9 is movable with continuous motion at a fifth speed V5 almost equal to, or slightly lower than, the third speed V3 at which the transfer elements 10 are moved, the groups 101 of objects are transferred from the third moving means 4 to the fifth moving means 9 without the objects 100 undergoing accelerations or decelerations, this ensuring their stability and balance.

With particular reference to figures 8 and 9, the operation of the variant of the moving apparatus comprising a second belt 22 having a smaller number of stop teeth 6 provides that the first moving means 2 during each moving step of the intermittent motion separate and push a plurality of groups 101 of objects (for example two in the example illustrated), in particular in number equal to the number of seats 11 (for example two) present on each transfer element 10, along the first advancement direction A towards the second moving means 3 (assisted by the fourth moving means 23). Each group 101 of objects is formed by a set number N of objects 100, for example three, whereby the first moving means 2 separate and push a total of six objects 100 in each moving step, which are received and abutted by the second moving means 3 which deviate the trajectory of said objects.

The two groups 101 of objects moved by the second moving belt 22 are abutted in succession and separately by the transfer element 10, each group 101 being housed in a respective seat 11 of the transfer element 10.

The method of the invention for moving objects comprises the following steps:
- moving on an advancement plane 12 objects 100 arranged aligned one behind the other and in contact along a first advancement direction A with intermittent motion at a first speed V1 so as to separate and form groups 101 of set number N of objects 100 at each moving step of said intermittent motion;
- receiving at least one group 101 of objects at a time and then moving the group on a first moving plane 13 along a transfer direction B, which is inclined by an angle α with respect to the first advancement direction A, with continuous motion at a second speed V2, the first moving plane 13 being coplanar to advancement plane 12;
- abutting and picking up at least one group 101 of objects at a time and moving the group with continuous motion at a third speed V3 on a supporting plane 16 along a second advancement direction C that is transverse, in particular almost orthogonal, to the first advancement direction A, said at least one group 101 comprising objects 100 arranged in a row in contact, in particular aligned perpendicularly to the second advancement direction C, the supporting plane 16 being coplanar with the first moving plane 13 and the advancement plane 12.

The method further comprises abutting, picking up and moving together a plurality of groups 101 of separate objects along the second advancement direction C.

The method further provides that the second speed V2 along the transfer direction B comprises a first speed component V2x parallel to the first advancement direction A and a second speed component V2y parallel to the second advancement direction C. The first speed component V2x is lower than the first moving speed V1 of the first moving means 2 and the second speed component V2y is lower than the third moving speed V3 of the transfer element 10.

Thanks to the moving apparatus 1 and the method for moving objects of the invention it is therefore possible to accurately and efficiently pick up objects 100 arranged aligned and in contact along a first advancement direction A and arrange said objects in groups 101 in parallel and spaced rows, which are moved along a second advancement direction C, orthogonal to the first advancement direction A.

In particular, thanks to the second moving means 3, which transfer the objects 100 along the transfer direction B that is inclined by an angle α, in particular equal to 15°, with respect to the first advancement direction A, it is possible to reduce decelerations and accelerations acting on the objects 100 when they are abutted, picked up and moved by the transfer elements 10 of the third moving means 4 along the second advancement direction C.

The moving apparatus 1 is therefore capable of operating also at high moving speeds (speed V1, V2, V3, V4, V5) of the objects 100 in a safe and reliable manner.

Thanks to the use of respective moving belts and transport belts to make the moving means 2, 3, 4, 9, 23 for moving objects 100 and groups 101 of objects, the moving apparatus 1 of the invention is of simple and economical construction and has precise and reliable operation.

## Claims

1. Moving apparatus (1) for objects (100) comprising:
- first moving means (2) comprising at least one first moving belt (21) configured to abut said objects (100) arranged aligned one behind the other and in contact along a first advancement direction (A) on an advancement plane (12), said at least one first moving belt (21) being mobile with intermittent motion in order to move along said first advancement direction (A) at a first speed (V1) said objects (100) and to separate said objects (100) in groups (101) of a set number (N);
- second moving means (3) comprising a second moving belt (22) arranged to abut said objects (100), said second moving means (3) being arranged to receive said groups (101) of objects from said first moving means (2) and move the groups separately on a first moving plane (13), which is coplanar to said advancement plane (12), with continuous motion at a second speed (V2) along a transfer direction (B) that is inclined by an angle (α) with respect to said first advancement direction (A);
- third moving means (4) comprising at least one transfer element (10) that is mobile with continuous motion at a third speed (V3) along a second advancement direction (C), which is transversal, in particular almost orthogonal, to said first advancement direction (A), and is arranged to abut and pick up at least one group (101) of objects at a time from said second moving means (3) and then move along said second advancement direction (C) said at least one group (101) of said objects (100) arranged in a row on a supporting plane (16) that is coplanar to said advancement plane (12) and said first moving plane (13); and
- supporting means (7) suitable to support and move said at least one transfer element (10) along a closed curvilinear path (P) having a first operating section (P1) along which said transfer element (10) is movable along said second advancement direction (C).

2. Moving apparatus (1) according to claim 1, wherein said at least one first moving belt (21) is arranged to abut a side wall of said objects (100) so as to move the objects along said first advancement direction (A).

3. Moving apparatus (1) according to claim 1 or 2, wherein said first moving means (2) comprise a pair of first moving belts (21) parallel and opposite each other and configured to abut opposite side walls of said objects (100) and move said objects (100) along said first advancement direction (A).

4. Moving apparatus (1) according to any preceding claim, wherein said second moving belt (22) is arranged to abut a side wall of said objects (100) and is provided with at least one stop tooth (6) suitable for abutting and retaining at least one group (101) of objects coming out from said first moving means (2).

5. Moving apparatus (1) according any preceding claim, wherein said moving belts (21, 22) are endless belts and are mounted on respective pulleys (25, 26, 27, 28) rotatable about vertical axes.

6. Moving apparatus (1) according to any preceding claim, wherein said angle (α) is comprised between 5° and 25°, in particular it is equal to about 15°.

7. Moving apparatus (1) according to any preceding claim, comprising fourth moving means (23) interposed between said first moving means (2) and said second moving means (3) and configured to cooperate in transferring said groups (101) of objects from said first moving means (2) to said second moving means (3).

8. Moving apparatus (1) according to claim 7, wherein said fourth moving means (23) are movable with continuous motion, parallel to said first advancement direction (A) at a fourth speed (V4), in particular higher than said second speed (V2), and comprise a respective transport belt that forms said first moving plane (13) for said groups (101) of objects.

9. Moving apparatus (1) according to any preceding claim, wherein said at least one transfer element (10) has an elongated shape and extends transversely, in particular almost orthogonally, to said second advancement direction (C), said transfer element (10) comprising at least one seat (11) suitable for receiving and retaining a group (101) of objects moved by said second moving means (3).

10. Moving apparatus (1) according to claim 9, wherein said at least one transfer element (10) comprises a plurality of seats (11) suitable to receive respective groups (101) of objects to be moved together along said second advancement direction (C), in particular said seats (11) being positioned side by side along a direction parallel to said first advancement direction (A) and staggered along a direction parallel to said second advancement direction (C).

11. Moving apparatus (1) according to any preceding claim, wherein said supporting means (7) comprise at least one endless driving chain (8) mounted on respective pulleys (29) rotatable about horizontal axes, said transfer element (10) being cantilevered mounted on said at least one driving chain (8).

12. Moving apparatus (1) according to any preceding claim, comprising a plurality of transfer elements (10) mounted spaced apart on said supporting means (7).

13. Moving apparatus (1) according to any preceding claim, comprising fifth moving means (9) positioned downstream said third moving means (4) and arranged to receive from said third moving means said groups (101) of objects arranged on parallel and spaced rows and moving said groups along said second advancement direction (C), in particular said fifth moving means (9) being mobile with continuous motion at a fifth speed (V5), in particular substantially equal to said third speed (V3) of said third moving means (4), and including a transport belt forming a second moving plane (15) for said groups (101) of objects, said second moving plane (15) being coplanar to said advancement plane (12), said first moving plane (13) and said supporting plane (16).

14. Method for moving objects comprising:
- moving on an advancement plane (12) objects (100) arranged aligned one behind the other and in contact along a first advancement direction (A) with intermittent motion at a first speed (V1) so as to separate and form at each moving step of said intermittent motion groups (101) of a set number (N) of objects (100);
- receiving at least one groups (101) of objects at a time and moving said group (101) of objects on a first moving plane (13) along a transfer direction (B) that is inclined by an angle (α) with respect to said first advancement direction (A) with continuous motion at a second speed (V2), said first moving plane (13) being coplanar to said advancement plane (12);
- abutting and picking up said at least one group (101) of objects at a time and moving the group with continuous motion at a third speed (V3) on a supporting plane (16) along a second advancement direction (C) transversal, in particular almost orthogonal, to said first advancement direction (A), said at least one group (101) of objects comprising objects (100) arranged in contact to each other in a row, in particular aligned perpendicularly to said second advancement direction (C), said supporting plane (16) being coplanar to said first moving plane (13) and said advancement plane (12).

15. Method according to claim 14, comprising abutting, picking up and moving together along said second advancement direction (C) a plurality of groups (101) of objects.

16. Method according to claim 14 or 15, wherein said second speed (V2) along said transfer direction (B) comprises a first speed component (V2x) that is parallel to the first advancement direction (A) and a second speed component (V2y) that is parallel to the second advancement direction (C), wherein said first speed component (V2x) is lower than said first moving speed (V1) of said first moving means (2) and said second speed component (V2y) is lower than said third moving speed (V3) of the transfer element (10).

## Patentansprüche

1. Bewegungsvorrichtung (1) für Objekte (100), aufweisend:
- erste Bewegungsmittel (2), aufweisend mindestens ein erstes Bewegungsband (21), das ausgebildet ist, an den entlang einer ersten Vorschubrichtung (A) hintereinander ausgerichtet angeordneten und in Kontakt stehenden Objekten (100) auf einer Vorschubebene (12) anzuliegen, wobei das mindestens eine erste Bewegungsband (21) mit intermittierender Bewegung bewegbar ist, um die Objekte (100) mit einer ersten Geschwindigkeit (V1) entlang der ersten Vorschubrichtung (A) zu bewegen und die Objekte (100) in Gruppen (101) einer festgelegten Anzahl (N) zu trennen;
- zweite Bewegungsmittel (3), aufweisend ein zweites Bewegungsband (22), das so angeordnet ist, dass es an den Objekten (100) anliegt, wobei die zweiten Bewegungsmittel (3) so angeordnet sind, dass sie die Gruppen (101) von Objekten von den ersten Bewegungsmitteln (2) aufnehmen und die Gruppen getrennt auf einer ersten Bewegungsebene (13), die koplanar zu der Vorschubebene (12) ist, mit kontinuierlicher Bewegung mit einer zweiten Geschwindigkeit (V2) entlang einer Transferrichtung (B), die um einen Winkel (α) gegenüber der ersten Vorschubrichtung (A) geneigt ist, bewegen;
- dritte Bewegungsmittel (4), aufweisend mindestens ein Transferelement (10), das mit einer dritten Geschwindigkeit (V3) entlang einer zweiten Vorschubrichtung (C), die transversal, insbesondere nahezu orthogonal, zu der ersten Vorschubrichtung (A) ist, kontinuierlich bewegbar ist, und das so angeordnet ist, dass es an jeweils mindestens einer Gruppe (101) von Objekten anliegt und diese von den zweiten Bewegungsmitteln (3) aufnimmt und dann die mindestens eine Gruppe (101) von Objekten (100), die in einer Reihe auf einer Auflageebene (16) angeordnet sind, die zu der Vorschubebene (12) und der ersten Bewegungsebene (13) koplanar ist, entlang der zweiten Vorschubrichtung (C) bewegt; und
- Tragemittel (7), die geeignet sind, das mindestens eine Transferelement (10) entlang einer geschlossenen gekrümmten Bahn (P), die einen ersten Betriebsabschnitt (P1) besitzt, entlang dem das Transferelement (10) entlang der zweiten Vorschubrichtung (C) bewegbar ist, zu tragen und zu bewegen.

2. Bewegungsvorrichtung (1) nach Anspruch 1, wobei das mindestens eine erste Bewegungsband (21) so angeordnet ist, dass es an einer Seitenwand der Objekte (100) anliegt, um die Objekte entlang der ersten Vorschubrichtung (A) zu bewegen.

3. Bewegungsvorrichtung (1) nach Anspruch 1 oder 2, wobei die ersten Bewegungsmittel (2) ein Paar von ersten Bewegungsbändern (21) aufweisen, die parallel und einander gegenüberliegend angeordnet und ausgebildet sind, an gegenüberliegenden Seitenwänden der Objekte (100) anzuliegen und die Objekte (100) entlang der ersten Vorschubrichtung (A) zu bewegen.

4. Bewegungsvorrichtung (1) nach einem der vorstehenden Ansprüche, wobei das zweite Bewegungsband (22) so angeordnet ist, dass es an einer Seitenwand der Objekte (100) anliegt, und mit mindestens einem Anschlagzahn (6) versehen ist, der zum Anliegen an und Halten mindestens einer Gruppe (101) von Objekten geeignet ist, die aus den ersten Bewegungsmitteln (2) austreten.

5. Bewegungsvorrichtung (1) nach einem der vorstehenden Ansprüche, wobei die Bewegungsbänder (21, 22) endlose Bänder sind und auf jeweiligen Riemenscheiben (25, 26, 27, 28) montiert sind, die um vertikale Achsen drehbar sind.

6. Bewegungsvorrichtung (1) nach einem der vorstehenden Ansprüche, wobei der Winkel (α) zwischen 5° und 25° enthalten ist, insbesondere etwa 15° beträgt.

7. Bewegungsvorrichtung (1) nach einem der vorstehenden Ansprüche, aufweisend vierte Bewegungsmittel (23), die zwischen den ersten Bewegungsmitteln (2) und den zweiten Bewegungsmitteln (3) angeordnet und ausgebildet sind, bei dem Transfer der Gruppen (101) von Objekten von den ersten Bewegungsmitteln (2) zu den zweiten Bewegungsmitteln (3) zusammenzuwirken.

8. Bewegungsvorrichtung (1) nach Anspruch 7, wobei die vierten Bewegungsmittel (23) mit einer kontinuierlichen Bewegung parallel zu der ersten Vorschubrichtung (A) mit einer vierten Geschwindigkeit (V4), insbesondere höher als die zweite Geschwindigkeit (V2), bewegbar sind und ein jeweiliges Transportband aufweisen, das die erste Bewegungsebene (13) für die Gruppen (101) von Objekten bildet.

9. Bewegungsvorrichtung (1) nach einem der vorstehenden Ansprüche, wobei das mindestens eine Transferelement (10) eine längliche Form besitzt und sich transversal, insbesondere nahezu orthogonal, zu der zweiten Vorschubrichtung (C) erstreckt, wobei das Transferelement (10) mindestens einen Sitz (11) aufweist, der zum Aufnehmen und Halten einer Gruppe (101) von Objekten geeignet ist, die durch die zweiten Bewegungsmittel (3) bewegt werden.

10. Bewegungsvorrichtung (1) nach Anspruch 9, wobei das mindestens eine Transferelement (10) eine Mehrzahl von Sitzen (11) aufweist, die zum Aufnehmen jeweiliger Gruppen (101) von Objekten geeignet sind, die gemeinsam entlang der zweiten Vorschubrichtung (C) bewegt werden sollen, insbesondere wobei die Sitze (11) nebeneinander entlang einer Richtung parallel zu der ersten Vorschubrichtung (A) und versetzt entlang einer Richtung parallel zu der zweiten Vorschubrichtung (C) angeordnet sind.

11. Bewegungsvorrichtung (1) nach einem der vorstehenden Ansprüche, wobei die Tragemittel (7) mindestens eine endlose Antriebskette (8) aufweisen, die auf jeweiligen, um horizontale Achsen drehbaren Riemenscheiben (29) montiert ist, wobei das Transferelement (10) freitragend an der mindestens einen Antriebskette (8) montiert ist.

12. Bewegungsvorrichtung (1) nach einem der vorstehenden Ansprüche, aufweisend eine Mehrzahl von Transferelementen (10), die beabstandet voneinander an den Tragemitteln (7) montiert sind.

13. Bewegungsvorrichtung (1) nach einem der vorstehenden Ansprüche, aufweisend fünfte Bewegungsmittel (9), die stromabwärts von den dritten Bewegungsmitteln (4) positioniert und so angeordnet sind, dass sie von den dritten Bewegungsmitteln die Gruppen (101) von Objekten, die in parallelen und beabstandeten Reihen angeordnet sind, aufnehmen und die Gruppen entlang der zweiten Vorschubrichtung (C) bewegen, insbesondere wobei die fünften Bewegungsmittel (9) mit kontinuierlicher Bewegung mit einer fünften Geschwindigkeit (V5) bewegbar sind, insbesondere im Wesentlichen gleich der dritten Geschwindigkeit (V3) der dritten Bewegungsmittel (4), und ein Transportband beinhalten, das eine zweite Bewegungsebene (15) für die Gruppen (101) von Objekten bildet, wobei die zweite Bewegungsebene (15) koplanar zu der Vorschubebene (12), der ersten Bewegungsebene (13) und der Auflageebene (16) ist.

14. Verfahren zum Bewegen von Objekten, aufweisend:
- Bewegen von Objekten (100), die entlang einer ersten Vorschubrichtung (A) hintereinander ausgerichtet angeordnet sind und in Kontakt stehen, auf einer Vorschubebene (12) mit intermittierender Bewegung mit einer ersten Geschwindigkeit (V1), um bei jedem Bewegungsschritt der intermittierenden Bewegung Gruppen (101) einer festgelegten Anzahl (N) von Objekten (100) zu trennen und zu bilden;
- Aufnehmen von jeweils mindestens einer Gruppe (101) von Objekten und Bewegen der Gruppe (101) von Objekten auf einer ersten Bewegungsebene (13) entlang einer Transferrichtung (B), die um einen Winkel (α) gegenüber der ersten Vorschubrichtung (A) geneigt ist, mit kontinuierlicher Bewegung mit einer zweiten Geschwindigkeit (V2), wobei die erste Bewegungsebene (13) koplanar zu der Vorschubebene (12) ist;
- Jeweiliges Anliegen an und Aufnehmen der mindestens einen Gruppe (101) von Objekten und Bewegen der Gruppe mit kontinuierlicher Bewegung mit einer dritten Geschwindigkeit (V3) auf einer Auflageebene (16) entlang einer zweiten Vorschubrichtung (C), die transversal, insbesondere nahezu orthogonal, zu der ersten Vorschubrichtung (A) ist, wobei die mindestens eine Gruppe (101) von Objekten Objekte (100) aufweist, die miteinander in Kontakt in einer Reihe angeordnet sind, insbesondere senkrecht zu der zweiten Vorschubrichtung (C) ausgerichtet sind, wobei die Auflageebene (16) koplanar zu der ersten Bewegungsebene (13) und der Vorschubebene (12) ist.

15. Verfahren nach Anspruch 14, aufweisend ein Anliegen an, Aufnehmen und gemeinsames Bewegen entlang der zweiten Vorschubrichtung (C) einer Mehrzahl von Gruppen (101) von Objekten.

16. Verfahren nach Anspruch 14 oder 15, wobei die zweite Geschwindigkeit (V2) entlang der Transferrichtung (B) eine erste Geschwindigkeitskomponente (V2x), die parallel zu der ersten Vorschubrichtung (A) ist, und eine zweite Geschwindigkeitskomponente (V2y), die parallel zu der zweiten Vorschubrichtung (C) ist, aufweist, wobei die erste Geschwindigkeitskomponente (V2x) geringer ist als die erste Bewegungsgeschwindigkeit (V1) der ersten Bewegungsmittel (2) und die zweite Geschwindigkeitskomponente (V2y) geringer ist als die dritte Bewegungsgeschwindigkeit (V3) des Transferelements (10).

## Revendications

1. Appareil de déplacement (1) pour des objets (100) comprenant :
- des premiers moyens de déplacement (2) comprenant au moins une première courroie mobile (21) configurée pour buter contre lesdits objets (100) agencés alignés les uns derrière les autres et en contact le long d'une première direction d'avancement (A) sur un plan d'avancement (12), ladite au moins une première courroie mobile (21) étant mobile avec un mouvement intermittent afin de déplacer le long de ladite première direction d'avancement (A) à une première vitesse (V1) lesdits objets (100) et de séparer lesdits objets (100) en groupes (101) d'un nombre (N) défini ;
- des deuxièmes moyens de déplacement (3) comprenant une seconde courroie mobile (22) agencée pour buter contre lesdits objets (100), lesdits deuxièmes moyens de déplacement (3) étant agencés pour recevoir lesdits groupes (101) d'objets à partir desdits premiers moyens de déplacement (2) et déplacer les groupes séparément sur un premier plan de déplacement (13), qui est coplanaire avec ledit plan d'avancement (12), avec un mouvement continu à une deuxième vitesse (V2) le long d'une direction de transfert (B) qui est inclinée selon un angle (α) par rapport à ladite première direction d'avancement (A) ;
- des troisièmes moyens de déplacement (4) comprenant au moins un élément de transfert (10) qui est mobile avec un mouvement continu à une troisième vitesse (V3) le long d'une seconde direction d'avancement (C), qui est transversale, en particulier presque orthogonale, à ladite première direction d'avancement (A), et est agencé pour buter contre et saisir au moins un groupe (101) d'objets à un moment à partir desdits deuxièmes moyens de déplacement (3) puis déplacer le long de ladite seconde direction d'avancement (C) ledit au moins un groupe (101) desdits objets (100) agencés dans une rangée sur un plan de support (16) qui est coplanaire avec ledit plan d'avancement (12) et ledit premier plan de déplacement (13) ; et
- des moyens de support (7) appropriés pour supporter et déplacer ledit au moins un élément de transfert (10) le long d'un chemin curviligne fermé (P) ayant une première section de fonctionnement (P1) le long de laquelle ledit élément de transfert (10) est mobile le long de ladite seconde direction d'avancement (C).

2. Appareil de déplacement (1) selon la revendication 1, dans lequel ladite au moins une première courroie mobile (21) est agencée pour buter contre une paroi latérale desdits objets (100) de manière à déplacer les objets le long de ladite première direction d'avancement (A).

3. Appareil de déplacement (1) selon la revendication 1 ou 2, dans lequel lesdits premiers moyens de déplacement (2) comprennent une paire de premières courroies mobiles (21) parallèles et opposées l'une à l'autre et configurées pour buter contre des parois latérales opposées desdits objets (100) et déplacer lesdits objets (100) le long de ladite première direction d'avancement (A).

4. Appareil de déplacement (1) selon une quelconque revendication précédente, dans lequel ladite seconde courroie mobile (22) est agencée pour buter contre une paroi latérale desdits objets (100) et est pourvue d'au moins une dent d'arrêt (6) appropriée pour buter contre et retenir au moins un groupe (101) d'objets sortant desdits premiers moyens de déplacement (2).

5. Appareil de déplacement (1) selon une quelconque revendication précédente, dans lequel lesdites courroies mobiles (21, 22) sont des courroies sans fin et sont montées sur des poulies (25, 26, 27, 28) respectives rotatives autour d'axes verticaux.

6. Appareil de déplacement (1) selon une quelconque revendication précédente, dans lequel ledit angle (α) est compris entre 5° et 25°, en particulier il est égal à environ 15°.

7. Appareil de déplacement (1) selon une quelconque revendication précédente, comprenant des quatrièmes moyens de déplacement (23) interposés entre lesdits premiers moyens de déplacement (2) et lesdits deuxièmes moyens de déplacement (3) et configurés pour coopérer dans le transfert desdits groupes (101) d'objets desdits premiers moyens de déplacement (2) auxdits deuxièmes moyens de déplacement (3).

8. Appareil de déplacement (1) selon la revendication 7, dans lequel lesdits quatrièmes moyens de déplacement (23) sont mobiles dans un mouvement continu, parallèlement à ladite première direction d'avancement (A) à une quatrième vitesse (V4), en particulier supérieure à ladite deuxième vitesse (V2), et comprennent une courroie de transport respective qui forme ledit premier plan de déplacement (13) pour lesdits groupes (101) d'objets.

9. Appareil de déplacement (1) selon une quelconque revendication précédente, dans lequel ledit au moins un élément de transfert (10) a une forme allongée et s'étend transversalement, en particulier presque orthogonalement, à ladite seconde direction d'avancement (C), ledit élément de transfert (10) comprenant au moins un siège (11) approprié pour recevoir et retenir un groupe (101) d'objets déplacés par lesdits deuxièmes moyens de déplacement (3).

10. Appareil de déplacement (1) selon la revendication 9, dans lequel ledit au moins un élément de transfert (10) comprend une pluralité de sièges (11) appropriés pour recevoir des groupes (101) respectifs d'objets devant être déplacés ensemble le long de ladite seconde direction d'avancement (C), en particulier lesdits sièges (11) étant positionnés côte à côte le long d'une direction parallèle à ladite première direction d'avancement (A) et décalés le long d'une direction parallèle à ladite seconde direction d'avancement (C).

11. Appareil de déplacement (1) selon une quelconque revendication précédente, dans lequel lesdits moyens de support (7) comprennent au moins une chaîne d'entraînement (8) sans fin montée sur des poulies (29) respectives rotatives autour d'axes horizontaux, ledit élément de transfert (10) étant monté en porte-à-faux sur ladite au moins une chaîne d'entraînement (8).

12. Appareil de déplacement (1) selon une quelconque revendication précédente, comprenant une pluralité d'éléments de transfert (10) montés espacés sur lesdits moyens de support (7).

13. Appareil de déplacement (1) selon une quelconque revendication précédente, comprenant des cinquièmes moyens de déplacement (9) positionnés en aval desdits troisièmes moyens de déplacement (4) et agencés pour recevoir à partir desdits troisièmes moyens de déplacement lesdits groupes (101) d'objets agencés dans des rangées parallèles et espacées et déplaçant lesdits groupes le long de ladite seconde direction d'avancement (C), en particulier lesdits cinquièmes moyens de déplacement (9) étant mobiles avec un mouvement continu à une cinquième vitesse (V5), en particulier sensiblement égale à ladite troisième vitesse (V3) desdits troisièmes moyens de déplacement (4), et comportant une courroie de transport formant un second plan de déplacement (15) pour lesdits groupes (101) d'objets, ledit second plan de déplacement (15) étant coplanaire avec ledit plan d'avancement (12), ledit premier plan de déplacement (13) et ledit plan de support (16).

14. Procédé pour déplacer des objets comprenant :
- le déplacement sur un plan d'avancement (12) d'objets (100) agencés alignés les uns derrière les autres et en contact le long d'une première direction d'avancement (A) avec un mouvement intermittent à une première vitesse (V1) de manière à séparer et former à chaque étape de déplacement dudit mouvement intermittent groupes (101) d'un nombre (N) défini d'objets (100) ;
- la réception d'au moins un groupe (101) d'objets à la fois et le déplacement dudit groupe (101) d'objets sur un premier plan de déplacement (13) le long d'une direction de transfert (B) qui est inclinée selon un angle (α) par rapport à ladite première direction d'avancement (A) avec un mouvement continu à une deuxième vitesse (V2), ledit premier plan de déplacement (13) étant coplanaire avec ledit plan d'avancement (12) ;
- la butée et la saisie dudit au moins un groupe (101) d'objets à la fois et le déplacement du groupe avec un mouvement continu à une troisième vitesse (V3) sur un plan de support (16) le long d'une seconde direction d'avancement (C) transversale, en particulier presque orthogonale, à ladite première direction d'avancement (A), ledit au moins un groupe (101) d'objets comprenant des objets (100) agencés en contact les uns avec les autres dans une rangée, en particulier alignés perpendiculairement à ladite seconde direction d'avancement (C), ledit plan de support (16) étant coplanaire avec ledit premier plan de déplacement (13) et ledit plan d'avancement (12).

15. Procédé selon la revendication 14, comprenant la butée, la saisie et le déplacement ensemble le long de ladite seconde direction d'avancement (C) d'une pluralité de groupes (101) d'objets.

16. Procédé selon la revendication 14 ou 15, dans lequel ladite deuxième vitesse (V2) le long de ladite direction de transfert (B) comprend une première composante de vitesse (V2x) qui est parallèle à la première direction d'avancement (A) et une seconde composante de vitesse (V2y) qui est parallèle à la seconde direction d'avancement (C), dans lequel ladite première composante de vitesse (V2x) est inférieure à ladite première vitesse (V1) de déplacement desdits premiers moyens de déplacement (2) et ladite seconde composante de vitesse (V2y) est inférieure à ladite troisième vitesse (V3) de déplacement de l'élément de transfert (10).
